# EUROPÄISCHE PATENTSCHRIFT

(11) **EP 3 047 635 B1**
(45) Veröffentlichungstag und Bekanntmachung des Hinweises auf die Patenterteilung: **06.06.2018**
(21) Anmeldenummer: 14762039.7
(22) Anmeldetag: 12.09.2014
(51) Int. Cl.: H04L 29/12

(54) **FELDBUSKOPPLER ZUR ANBINDUNG VON MODULEN AN EINEN FELDBUS UND VERFAHREN ZUR ADRESSIERUNG DERARTIGER MODULE**
FIELD BUS COUPLER FOR CONNECTING MODULES TO A FIELD BUS AND METHOD FOR ADDRESSING SUCH MODULES
COUPLEUR DE BUS DE TERRAIN POUR LA CONNEXION DE MODULES À UN BUS DE TERRAIN ET PROCÉDÉ D'ADRESSAGE DE CES MODULES

(30) Priorität: 16.09.2013 DE 102013110185
(43) Veröffentlichungstag der Anmeldung: 27.07.2016
(73) Patentinhaber: Weidmüller Interface GmbH & Co. KG, 32758 Detmold (DE)
(72) Erfinder: DAUER, Jörn, 33818 Leopoldshöhe (DE); HOFFMANN, Andreas, 32657 Lemgo (DE); SCHÖLS, Frank-Herrmann, 33647 Bielefeld (DE)
(74) Vertreter: Kleine, Hubertus
(86) Internationale Anmeldenummer: PCT/EP2014/069546
(87) Internationale Veröffentlichungsnummer: WO 2015/036567

(56) Entgegenhaltungen:
- EP-A2- 2 530 879
- EP-A2- 2 568 391
- US-A1- 2012 215 874

## Beschreibung

Die Erfindung betrifft einen Feldbuskoppler zur Anbindung von Modulen an einen Feldbus eines industriellen Automatisierungssystems über einen Subbus. Die Erfindung betrifft weiterhin ein Verfahren zur Adressierung derartiger Module.

In industriellen Automatisierungssystemen werden Feldbusse zur Übertragung von Steuerungsdaten und/oder Messwerten zwischen einer oder mehrerer zentraler Steuerungsrechner, auch Leitrechner oder speicherprogrammierbare Steuerung (SPS) genannt, und Feldgeräten ausgetauscht. Häufig wird dabei nicht jedes einzelne Feldgerät unmittelbar an den Feldbus angeschlossen sondern über einen eingangs genannten Feldbuskoppler, der eine Datenschnittstelle zwischen dem Feldbus einerseits und einem häufig proprietären Subbus andererseits darstellt, wobei eine Mehrzahl von busfähigen Anschluss- und/oder Funktionsmodulen, zusammenfassend als Module bezeichnet, an diesem Subbus angekoppelt werden können.

Ein solcher Feldbuskoppler, auch Feldbus-Gateway genannt, dient in der Regel auch der Konfiguration der angeschlossenen Module. Von letzteren ist eine Vielzahl verschiedener Ausgestaltungen bekannt, beispielsweise Module, die digitale und/oder analoge Ein- und/oder Ausgabekanäle bereitstellen und die auch als "Remote I/O (input/output)-Bausteine" bezeichnet werden, Signalwandler, Relaisbausteine, Zählerbausteine, Interface-Module und so weiter. Zusammenfassend wird das System aus Feldbuskoppler und angeschlossenen busfähigen Anschluss- und/oder Funktionsmodulen auch als modulares dezentrales I/O-System bezeichnet.

Im Hinblick auf die physikalische Ausgestaltung eines derartigen I/O-Systems sind verschiedene Ausführungen bekannt. So ist beispielsweise eine rahmenähnliche Ausgestaltung eines Feldbuskopplers bekannt, bei dem der Subbus als ein Rückwandbus ausgebildet ist. Der Rahmen stellt eine Mehrzahl von Einsteckplätzen für die Module bereit, die den Rückwandbus kontaktieren und über diesen mit dem Feldbuskoppler kommunizieren. Auch eine Stromversorgung über den Rückwandbus kann dabei vorgesehen sein.

Daneben ist ein flexibler Aufbau eines modularen dezentralen I/O-Systems bekannt, bei dem sowohl der Feldbuskoppler als auch die anschließbaren Module als aneinanderreihbare Scheiben ausgebildet sind. Die Scheiben können untereinander mechanisch verbunden werden und/oder auf eine Hutschiene oder einen vergleichbaren Träger aufgesetzt werden. Der Feldbuskoppler und die Module kontaktieren einander im aneinandergereihten Zustand, so dass über mehrere Module hinweg durchgehende Subbus-Signalleitungen und ggf. auch Stromversorgungsleitungen gebildet werden. Ein Vorteil dieses Systems, bei dem der Feldbuskoppler und die Module in Form von aneinanderreihbaren Scheiben vorliegen, liegt in einem kompakten und platzsparenden Aufbau, bei dem nur der Platzbedarf der tatsächlich benötigten Module anfällt.

Bei Initialisierung eines modularen dezentralen I/O-Systems, beispielsweise nach Installation oder nach einem Neustart des Systems, werden vom Feldbuskoppler die angeschlossenen Module durch eine Abfrageschleife (Polling-Mechanismus) abgefragt und ihnen Adressen zugewiesen. Die Adressen werden dabei aufsteigend vom Feldbuskoppler ausgehend sukzessive den Modulen zugewiesen: das unmittelbar zum Feldbuskoppler benachbarte Modul bekommt eine erste Moduladresse, typischerweise eine 1, das daran benachbarte Modul die nächste Adresse, typischerweise eine 2, und so weiter. Wenn in diesem Polling-Mechanismus alle angeschlossenen Module erfasst sind und ihnen eine Adresse zugewiesen wurde, wird diese Adressliste an den über den Feldbus angekoppelten übergeordneten Steuerungsrechner übermittelt. Der Steuerungsrechner kann daraufhin die ermittelte Konfiguration mit einer vorgegebenen Konfiguration überprüfen, um feststellen zu können, ob das geplante Steuerungsprogramm mit der vorgefundenen Konfiguration ausgeführt werden kann.

Ein Ansprechen der Module durch den Steuerungsrechner erfolgt im Programmablauf dann über den Feldbuskoppler anhand der ermittelten und übertragenen Adresse. Das genannte Adressierungsverfahren wird üblicherweise nicht nur mit I/O-Systemen mit aneinandergereihten Modulen verwendet, sondern auch bei I/O-Systemen, die einen Einschubrahmen mit Einschubplätzen aufweisen. Auch hier erfolgt eine Adressierung üblicherweise nicht auf Basis der Einschubplatznummern, sondern auf Basis von Adressen, die auf die zuvor beschriebene Art sukzessiv den im Einschubrahmen vorhandenen Modulen zugewiesen werden.

Ein bekanntes Adresszuteilungsverfahren bei modularen und dynamisch veränderbaren Systemen ist das dynamic host configuration protocol (DHCP). Beispielsweise beschreibt die Druckschrift US 2012/0215874 A1 die Verwendung von DHCP zur Adresszuteilung in einem System zur Personenzahlermittlung.

In der Druckschrift EP 2 560 879 A2 ist ein Adresszuteilungsverfahren für Systeme mit redundanten Komponenten beschreiben, denen eine gemeinsame virtuelle Adresse zugewiesen wird.

Hersteller von automatisierten Industrieanlagen bieten ihre Anlagen häufig in verschiedenen Ausbaustufen kundenspezifisch an. Je nach Ausbaustufe wird auch eine erweiterte Anordnung von Modulen in den modularen dezentralen I/O-Systemen benötigt. Dabei kann es häufig auftreten, das zusätzliche Module nicht an das freie Ende einer bereits bestehenden Modulkette anzuordnen sind, sondern aus Gründen der übersichtlicheren und effektiveren Verdrahtung der Module an eine bestimmte Stelle innerhalb einer bestehenden Modulkette eingeschoben werden müssen. Damit ändert sich bei dem bekannten Adressierungsverfahren die Adresse der nachfolgenden Module, was eine unter Umständen sehr aufwendige Anpassung des Steuerprogramms erforderlich macht.

Es ist daher eine Aufgabe der vorliegenden Erfindung, ein Adressierungsverfahren und einen dieses verwendenden Feldbuskoppler der eingangs genannten Art zu schaffen, wobei eine Ergänzung oder Modifikation der Zusammenstellung von Modulen eines dezentralen modularen I/O-Systems möglich ist, ohne dass dieses eine Anpassung eines die Module ansprechenden Steuerprogramms erforderlich macht.

Diese Aufgabe wird gelöst durch ein Verfahren zur Adressierung von Modulen, die an einen Feldbuskoppler angeschlossen sind, sowie einen Feldbuskoppler mit den jeweiligen Merkmalen der unabhängigen Ansprüche. Vorteilhafte Ausgestaltungen und Weiterbildungen sind Gegenstand der abhängigen Ansprüche.

Ein erfindungsgemäßes Verfahren zur Adressierung von Modulen, die über einen Subbus mit einem Feldbuskoppler verbunden sind und über den Feldbuskoppler an einen Feldbus eines industriellen Automatisierungssystems angebunden sind, weist die folgenden Schritte auf: Ein Zuordnungsvektor wird in einem Speicher des Feldbuskopplers hinterlegt, wobei der Zuordnungsvektor eine aktuelle Konfiguration der Module widerspiegelt, indem der Zuordnungsvektor eine Anzahl von mindestens ebenso vielen Feldern aufweist, wie Module an den Feldbuskoppler anschließbar sind. Die Felder zeigen jeweils an, ob ein Moduls in einer aktuellen Konfiguration vorhanden ist.

Sukzessive werden die aktuell an den Subbus angeschlossenen Module ermittelt und den Modulen wird eine anhand des Zuordnungsvektors bestimmte Adresse zugeteilt. Anschließend erfolgt ein Adressieren der Module mit der jeweiligen zugeteilten Adresse. Über den Zuordnungsvektor kann somit die Adressvergabe für eine bestimmte aktuelle Konfiguration manipuliert werden, so dass bestimmte Module vorgegebene Adressen erhalten, auch wenn die Zusammenstellung der Module in verschiedenen Konfigurationen unterschiedlich ist. Bei Hinzufügen oder Entfernen eines Moduls braucht die Adressierung der verbleibenden Module im Steuerprogramm nicht angepasst werden.

Dabei können in einer vorteilhaften Ausgestaltung des Verfahrens die zugeteilten Adressen zur Adressierung der Module sowohl auf dem Subbus, als auch auf dem Feldbus verwendet werden. In diesem Fall werden die Adressen gewissermaßen als physikalische Adressen auf dem Subbus zugeteilt und einheitlich auf beiden Bussystemen genutzt.

Alternativ ist es in einer weiteren vorteilhaften Ausgestaltung des Verfahrens möglich, die zugeteilten Adressen zur Adressierung der Module auf dem Feldbus zu verwenden, wohingegen zur Adressierung auf dem Subbus davon abweichende Adressen verwendet werden. Hierbei werden die erfindungsgemäßen Adressen wie virtuelle Adressen auf dem Feldbus verwendet, wobei andere, in dem Sinne physikalische Adressen auf dem Subbus eingesetzt werden. Die auf dem Subbus verwendeten Adressen können beispielsweise gemäß einem aus dem Stand der Technik bekannten Verfahren zugeteilt werden. Vorteilhafterweise kann das erfindungsgemäße Verfahren so durchgeführt werden, ohne dass eine Änderung des Zuteilungsverfahrens von Moduladressen auf dem Subbus oder eines auf dem Subbus verwendeten Protokolls erforderlich ist. Bevorzugt erfolgt eine Adressumsetzung zwischen dem Subbus und dem Feldbus durch den Feldbuskoppler.

Bevorzugt werden die zugeteilten Adressen aus einer vorgegebenen Liste von Adressen entnommen, wobei ein Adresszeiger geführt wird, der auf die nächste zu vergebende Adresse in der Liste zeigt, und ein Feldzeiger geführt wird, der auf die Felder des Zuordnungsvektors zeigt. Der Feldzeiger und der Adresszeiger werden sukzessiv inkrementiert, wobei einem ermittelten Modul dann die Adresse, auf die der Adresszeiger zeigt, zugeteilt wird, wenn der Zuordnungsvektor ein Vorhandensein eines Moduls anzeigt. Der Zuordnungsvektor gibt somit an, welche Module in einer aktuellen Konfiguration verglichen mit einer möglichen Maximalkonfiguration vorhanden sind. Bei der Adresszuteilung werden nur den tatsächlich vorhandenen Modulen Adressen zugeteilt, aktuell nicht vorhandene Module werden jedoch mitberücksichtigt, in dem sie im Zuteilungsverfahren so berücksichtigt werden, als wären sie vorhanden.

In einer ebenfalls bevorzugten alternativen Ausgestaltung beinhaltet jedes Feld, das das Vorhandensein eines Moduls anzeigt, zugleich die gewünschte Adresse des entsprechenden Moduls. Es wird wiederum ein Feldzeiger geführt, der auf die Felder des Zuordnungsvektors zeigt. Dieser Feldzeiger wird inkrementiert, wobei einem ermittelten Modul dann die gewünschte Adresse aus dem Feld, auf das der Feldzeiger zeigt, zugeteilt wird, wenn der Zuordnungsvektor ein Vorhandensein eines Moduls anzeigt. Auf diese Weise können mit dem Zuordnungsvektor vorteilhaft nicht nur gegenüber der Maximalkonfiguration fehlende Module spezifiziert werden, sondern auch eine geänderte Reihenfolge der Module. In beiden beschriebenen Ausgestaltungen kann ein Vorhandensein eines Moduls beispielsweise durch einen Wert ungleich Null in dem jeweiligen Feld des Zuordnungsvektors angezeigt werden.
Ein erfindungsgemäßer Feldbuskoppler zur Anbindung von Modulen an einen Feldbus eines industriellen Automatisierungssystems über einen Subbus zeichnet sich durch eine Steuereinrichtung aus, die zur Durchführung eines der zuvor beschriebenen Verfahren eingerichtet ist. Es ergeben sich die im Zusammenhang mit den Verfahren beschriebenen Vorteile.

Die Erfindung ist durch das Verfahren nach Anspruch 1 und die Vorrichtung nach Anspruch 8 definiert.

Die Erfindung wird nachfolgend anhand von Ausführungsbeispielen mithilfe von sechs Figuren näher erläutert. Die Figuren zeigen:
- Fig. 1: eine industrielle Automatisierungsanlage in einem schematischen Blockschaltbild;
- Fig. 2: eine Ausgestaltung eines Feldbuskopplers zur Durchführung des anmeldungsgemäßen Verfahrens;
- Fig. 3: Diagramme zur Veranschaulichung eines Adressierungsverfahrens nach dem Stand der Technik; und
- Fig. 4 bis 6: Diagramme zur Veranschaulichung jeweils eines Ausführungsbeispiels eines anmeldungsgemäßen Adressierungsverfahrens.

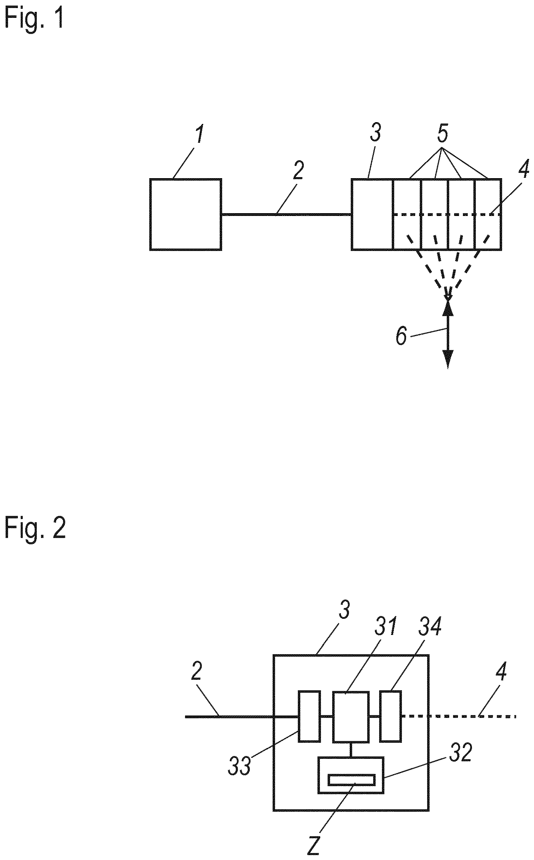

Fig. 1 zeigt in einer schematischen Darstellung einen möglichen Aufbau eines industriellen Automatisierungssystems.

Dieses weist einen Steuerungsrechner 1 auf, der über einen Feldbus 2 mit einem Feldbuskoppler 3 zum Austausch von Daten mit diesem verbunden ist. Der Feldbus kann dabei gemäß einem bekannten Standard wie beispielsweise Profibus, Profinet oder EtherCAT ausgebildet sein.

Der Feldbuskoppler 3 setzt über den Feldbus 2 ausgetauschte Daten auf einen bevorzugt seriellen Subbus 4 um, über den Module 5 an den Feldbuskoppler 3 angekoppelt sind. Neben dem Subbus 4, der in diesem Ausführungsbeispiel nur einer Übertragung von Daten dient, kann ein weiterer, hier nicht gezeigter Bus zur Stromversorgung der Module 5 und/oder des Feldbuskopplers 3 vorhanden sein. Zur Einspeisung von Versorgungsstrom sind zusätzlich Stromversorgungsmodule vorgesehen, die am Ende der dargestellten Anordnung der Module 5 oder zwischen Modulen 5 oder zwischen dem Feldbuskoppler 3 und den Modulen 5 angeordnet sein können. Die Ausgestaltung und Anordnung der Stromversorgungsmodule ist für die nachfolgend beschriebenen Verfahren zur Adressvergabe, Adressierung und ggf. Adressumsetzung nicht relevant.

Die Module 5 können übliche busfähige Anschluss- und/oder Funktionsmodule sein, beispielsweise Ein- /Ausgabemodule (I/O-Module). Beispielhaft sind I/O-Anschlüsse 6 in der Fig. 1 angedeutet. Über die I/O-Anschlüsse 6 werden Mess- und Steuersignale mit der zu steuernden Anlage ausgetauscht.

Fig. 2 zeigt den Aufbau des Feldbuskopplers 3 in einem schematischen Blockschaltbild detaillierter. Der Feldbuskoppler 3 weist als zentralen Baustein eine Steuereinrichtung 31, beispielsweise einen Mikrocontroller, auf, die mit einem Speicherbaustein 32 verbunden ist. Dieser kann ggf. intern in der Steuereinrichtung 31 ausgebildet sein. Die Steuereinrichtung 31 steht über eine Feldbusanschaltung 33 in Verbindung mit dem Feldbus 2 und über eine Subbusanschaltung 34 in Verbindung mit dem Subbus 4. Die Steuereinrichtung 31 ist durch ein Steuerprogramm, das beispielsweise im Speicher 32 abgelegt sein kann, dazu eingerichtet, über den Feldbus 2 empfangene Daten auf den Subbus 4 umzusetzen. Umgekehrt werden vom Subbus 4 empfangene Daten umgesetzt und über den Feldbus 2 weitergeleitet.

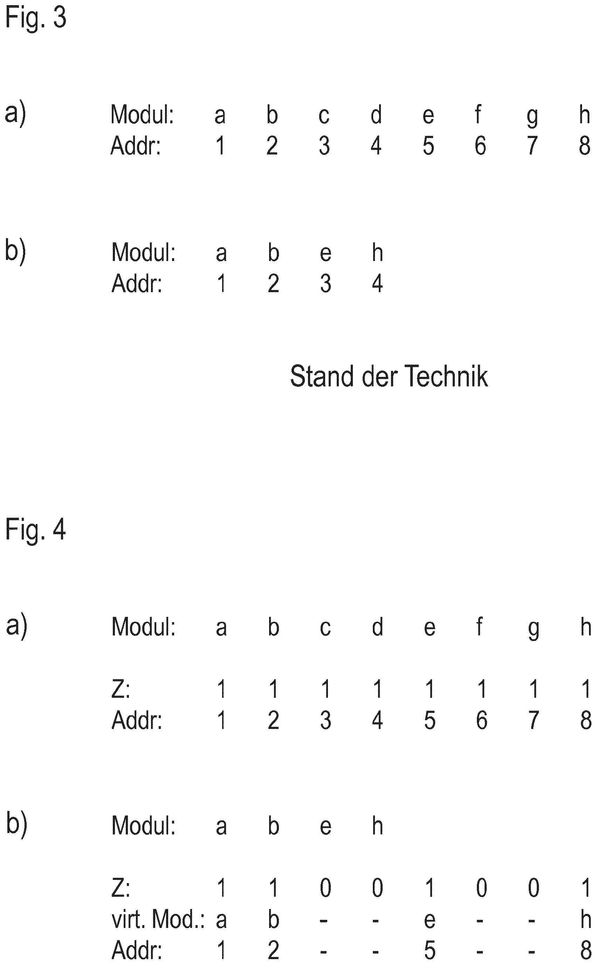

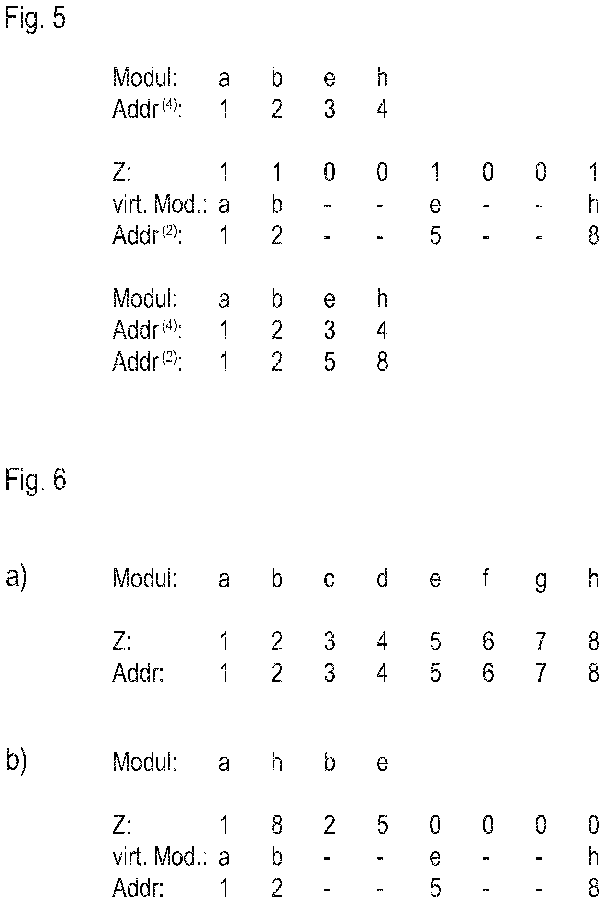

Zusätzlich werden vom Feldbuskoppler 3 Initialisierungs- und ggf. Konfigurierungsschritte ausgeführt, insbesondere zur Erfassung der an den Subbus 4 angeschlossenen Module 5 und zur Zuweisung von Adressen an diese Module 5. Dazu ist anmeldungsgemäß im Speicher 32 ein Zuordnungsvektor Z hinterlegt, dessen Aufbau und Funktion nachfolgend im Zusammenhang mit den Fig. 4 und 5 näher erläutert wird. Der Zuordnungsvektor Z kann beispielsweise durch entsprechende über den Feldbus 2 vom Steuerungsrechner 1 übermittelte Befehle in dem Speicher 32 hinterlegt werden.

Verfahren zur Zuordnung von Adressen für die Module durch einen Feldbuskoppler werden nachfolgend im Zusammenhang mit den Fig. 3 bis 5 anhand von Tabellen näher erläutert. Fig. 3 zeigt zunächst ein aus dem Stand der Technik bekanntes Verfahren, während in den Fig. 4 und 5 zwei Ausführungsbeispiele eines anmeldungsgemäßen Verfahrens wiedergegeben sind.

Bei allen Beispielen wird davon ausgegangen, dass der Feldbuskoppler mit max. acht Modulen verbunden werden kann. Diese Zahl ist der einfacheren Darstellung halber bewusst klein gewählt. Üblicherweise liegt die Zahl der an einen Feldbuskoppler anschließbaren und von dem Feldbuskoppler separat adressierbaren Module im Bereich von einigen zehn bis einigen hundert Modulen. Grundsätzlich ändert die Anzahl der anschließbaren Module die nachfolgend beschriebenen Verfahren jedoch nicht.

Es wird zudem davon ausgegangen, dass der Anschluss einer Anzahl von N=8 Modulen an den Feldbuskoppler eine maximale Ausbaustufe einer Automatisierungssteuerung für ein bestimmtes Anwendungsgebiet darstellt. In nicht vollständig ausgebauten Anlagen werden einige der Module nicht benötigt. Bei den Fig. 3 bis 5 ist jeweils im Teilbild a) die maximale Ausbaustufe mit acht Modulen dargestellt. Die acht Module werden mit den Buchstaben "a" bis "h" unterschieden. Im jeweiligen Teilbild b) ist eine Modul-Konfiguration einer nicht vollständig ausgebauten Anlage dargestellt, bei der nur die Module "a", "b", "e" und "h" verwendet werden.

Bei dem in Fig. 3 a) dargestellten bekannten Adressierungsverfahren eines Feldbuskopplers werden bei maximaler Ausbaustufe den Modulen "a" bis "h" nach Start des Feldbuskopplers die Adressen (Addr.) 1 bis 8 in der Reihenfolge der Aneinanderreihung (hier beispielhaft alphabetisch sortiert) zugeteilt. Die zugeteilten Adressen werden in einer Initialisierungsphase des Systems über den Feldbus dem Steuerungsrechner mitgeteilt, der die aufgefundene Konfiguration mit seinem hinterlegten Prozessabbild vergleicht und anschließend die Eignung des Feldbuskopplers und der angeschlossenen Module feststellt.

Bei dem in Fig. 3 b) dargestellten Fall des unvollständigen Ausbaus der Anlage, bei der nur die Module "a", "b", "e" und "h" in dieser Reihenfolge vorliegen, werden entsprechend die Adressen 1, 2, 3 und 4 zugeteilt und an den Steuerungsrechner übertragen. Im anschließend ausgeführten Steuerungsprogramm würde also das Modul "h", das innerhalb der gesteuerten Anlage in jeder Ausbaustufe mit bestimmten, fest vorgegebenen Funktionen belegt ist, unter der Adresse "4" angesprochen, wohingegen in der Vollausbaustufe der Anlage, in der alle acht Module vorhanden sind, diesem Modul "h" die Adresse 8 zugeteilt ist. Entsprechend wird für jede Ausbaustufe der Anlage ein angepasstes Steuerprogramm benötigt.

Die in den Fig. 4 bis 6 dargestellten Verfahren können beispielsweise von dem Feldbuskoppler 3 der Fig. 1 und 2 ausgeführt werden. Die Verfahren werden daher nachfolgend mit Bezug auf diese Figuren erläutert.

Bei dem in Fig. 4 dargestellten anmeldungsgemäßen Verfahren zur Adresszuteilung ist ein Zuordnungsvektor Z vorgesehen, der ebenso viele Felder umfasst, wie Module in der maximalen Ausbaustufe vorgesehen sind, hier also N=8 Felder. Jedes Feld nimmt in diesem Ausführungsbeispiel ein Bit auf, kann also einen Wert aus dem Wertebereich 0 oder 1 annehmen. Diese Bits geben an, ob ein Modul der maximal möglichen Ausbaustufe der Anlage in der aktuellen Konfiguration auch verwendet wird. Entsprechend sind für die Vollausbaustufe der Teilfigur a) alle Bits auf 1 gesetzt, wohingegen für die im Teilbild b) dargestellte Konfiguration das entsprechende Bit für die Module "a", "b", "e" und "h" auf 1 gesetzt, wohingegen es für die Module "c", "d", "f" und "g" auf 0 gesetzt ist.

Der Zuordnungsvektor Z wird vor Initialisierung des Systems dem Feldbuskoppler 3 vom Benutzer mitgeteilt, beispielsweise über eine geeignete Anweisung des Steuerungsprogramms des Steuerungsrechners 1 oder einen Konfigurationsprogramm, das auf einem Servicerechner ausgeführt wird. Gemäß dem Zuordnungsvektor Z erstellt der Feldbuskoppler 3 eine virtuelle Modulliste (in den Figuren als "virt. Mod." abgekürzt), bei der nicht vorhandenen Module bei der Adressvergabe berücksichtigt werden. Einem nicht vorhandenen Modul wird keine Adresse zugeteilt, der Adresszähler wird jedoch auch bei einem nicht vorhandenen Modul inkrementiert. In der Initialisierungsphase werden entsprechend den Modulen "a", "b", "e" und "h" wiederum auch bei dem nicht vollständigen Ausbau gemäß Teilbild b) die Adressen 1, 2, 5 und 8 zugeordnet, auch wenn die für diese Zuordnung die Module "c", "d", "f" und "g" real nicht vorhanden sind.

Bei einer Implementierung des Verfahrens kann beispielsweise vorgesehen sein, dass die zugeteilten Adressen aus einer vorgegebenen Liste von Adressen entnommen werden, wobei ein Adresszeiger geführt wird, der auf die nächste zu vergebende Adresse in der Liste zeigt. Im einfachsten Fall besteht die Liste aus den natürlichen Zahlen und der Wert des Adresszeigers selbst stellt die Adresse dar. Weiter wird ein Feldzeiger geführt, der auf die Felder des Zuordnungsvektors Z zeigt. Anfangs werden beide Zeiger auf den Wert 1 gesetzt, zeigen also auf das erste Feld bzw. die erste Adresse. Sukzessive werden nun der Feldzeiger und der Adresszeiger jeweils beide inkrementiert. Wenn das Feld des Zuordnungsvektors Z, auf das der Feldzeiger zeigt, auf 0 gesetzt ist, erfolgt keine Adresszuteilung und Feldzeiger und Adresszeiger werden erneut inkrementiert. Zeigt das Feld des Zuordnungsvektors Z, auf das der Feldzeiger zeigt, jedoch eine 1, wird dem nächsten ermittelten Modul 5 dann die Adresse zugeteilt, auf die der Adresszeiger zeigt. Danach wird das Verfahren mit der Inkrementierung der beiden Zeiger fortgeführt.

Durch das angegebene Verfahren wird unabhängig vom Ausbauzustand der Anlage und damit unabhängig davon, welche der Module 5 real vorhanden sind, eine immer gleiche Adressierung der Module 5 ermöglicht.

Bei dem anhand von Fig. 4 erläuterten Ausführungsbeispiel ist vorgesehen, die beim anmeldungsgemäßen Verfahren zugeteilten Adressen der Module 5 sowohl zu Adressierung der Module 5 auf dem Subbus 4, als auch auf dem Feldbus 2 zu verwenden.

In Fig. 5 ist in vergleichbarer Weise wie in Fig. 4 ein Ausführungsbeispiel dargestellt, bei dem auf dem Subbus 4 und auf dem Feldbus 2 unterschiedliche Adressen zur Adressierung der Module 5 verwendet werden.

In der oberen Zeile der Fig. 5 ist wiederum die aktuelle Konfiguration dargestellt, die aus den Modulen "a", "b", "e" und "h" besteht (wie auch beim Ausführungsbeispiel der Fig. 4b). Den Modulen 5 werden in einer Initialisierungsphase durch den Feldbuskoppler 3 Adressen zur Verwendung auf dem Subbus 4 zugeteilt. Diese Adressen sind in der Fig. 4 als Addr ⁽⁴⁾ gekennzeichnet. Diese Adressen werden beispielsweise nachdem im Zusammenhang mit Fig. 3 beschriebenen und aus dem Stand der Technik bekannten Verfahren zugeteilt, indem beginnend mit der Adressnummer 1 den aufgefundenen Modulen von links nach rechts aufsteigende Adressen zugeteilt werden, also hier die Adressen 1, 2, 3 und 4 für die Module "a", "b", "e" und "h".

In einem zweiten Schritt wird in der Initialisierungsphase vom Feldbuskoppler 3 wiederum unter Verwendung des Zuordnungsvektors Z eine virtuelle Modulliste erstellt, anhand derer Adressen für die Module 5 nach dem anmeldungsgemäßen Verfahren zugeteilt werden. Diese Adressen sind zur Verwendung auf dem Feldbus 2 bestimmt und werden in der Fig. 5 durch die Bezeichnung Addr⁽²⁾ gekennzeichnet. Die Adressen Addr⁽²⁾ entsprechen den im Ausführungsbeispiel der Fig. 4b zugeteilten Adressen, also 1, 2, 5 und 8 für die Module "a", "b", "e" und "h" (jeweils in der angegebenen Reihenfolge).

Bei einer Adressierung der Module 5 über den Feldbus 2 werden die zugeteilten Adressen Addr⁽²⁾ verwendet, die dann vom Feldbuskoppler 3 in die physikalisch den Modulen 5 zugeteilten Adressen Addr⁽⁴⁾ auf dem Subbus 4 umgesetzt werden. Die auf dem Feldbus benutzten Adressen Addr⁽²⁾ können in diesem Sinne als virtuelle Adressen für die Module 5 angesehen werden. Bei einer Datenübertragung von den Modulen 5 zu dem Steuerungsrechner 1 werden umgekehrt die auf dem Subbus 4 verwendeten Adressen Addr⁽⁴⁾ vom Feldbuskoppler 3 in die in diesem Sinne virtuellen Adressen Addr⁽²⁾ zur Verwendung auf den Feldbus 2 umgesetzt.

Zur Umsetzung der Adressen kann der Feldbuskoppler 3 beispielsweise eine Zuordnungstabelle verwenden, wie sie in den unteren beiden Zeilen der Fig. 5 dargestellt ist. In einer solchen Zuordnungstabelle ist jeder möglichen Adresse Addr⁽⁴⁾ auf dem Subbus 4 die entsprechende Adresse Addr⁽²⁾ auf dem Subbus 2 zugeordnet.

Fig. 6 verdeutlicht in ähnlicher Weise wie Fig. 4 eine weitere mögliche Ausgestaltung des Verfahrens. Bei dieser Ausgestaltung umfasst der Zuordnungsvektor eine Anzahl von N (hier wiederum N=8) Zahlen, die jeweils selbst einen Wertebereich von 0 bis N aufweisen. Wiederum gibt eine 0 an, dass das entsprechende Modul 5 real in der aktuellen Konfiguration nicht enthalten ist. Eine von 0 verschiedene Zahl gibt hier unmittelbar die Adresse an, die dem jeweiligen Modul 5 zuzuordnen ist. Auf diese Weise kann nicht nur ein nicht vorhandenes Modul 5 berücksichtigt werden, sondern auch eine in einer aktuellen Konfiguration geänderte Reihenfolge, in der sich die Module 5 an den Feldbuskoppler 3 anschließen, berücksichtigt werden. Im Beispiel der Fig. 6 befindet sich das Modul "h" zwischen den Modulen "a" und "b" und nicht hinter dem Modul "e"; dennoch wird für die Module 5 die gewünschte Adressierung beibehalten. Das in Fig. 6 gezeigte Verfahren kann natürlich analog zum Beispiel der Fig. 5 gezeigt derart ausgebildet sein, dass die Module 5 zur Adressierung auf dem Subbus 4 mit einer nach dem Stand der Technik zugeteilten Adresse angesprochen worden, wohingegen auf dem Feldbus 2 die anmeldungsgemäß ermittelte Adresse verwendet wird. Wiederum übernimmt in einem solchen Fall der Feldbuskoppler 3 eine Adressumsetzung.

Es versteht sich, dass auch Adressen mit komplexerer Struktur, bei denen der Adressraum nicht einfach aus den Zahlern 1 bis N besteht, auf die gleiche Art und Weise bezüglich fehlender Module oder bezüglich einer Änderung der Reihenfolge der Module durch das anmeldungsgemäße Verfahren modifiziert werden können.

### Bezugszeichenliste

- 1: Steuerungsrechner
- 2: Feldbus
- 3: Feldbuskoppler

- 31: Steuereinrichtung
- 32: Speicher
- 33: Feldbusanschaltung
- 34: Subbusanschaltung

- 4: Subbus
- 5: Modul
- 6: I/O-Anschluss

- Z: Zuordnungsvektor
- N: max. Anzahl der Module
- Addr⁽²⁾: Adresse zur Verwendung auf dem Feldbus
- Addr⁽⁴⁾: Adresse zur Verwendung auf dem Subbus

## Patentansprüche

1. Verfahren zur Adressierung von Modulen (5), die über einen Subbus (4) mit einem Feldbuskoppler (3) verbunden sind und über den Feldbuskoppler (3) an einen Feldbus (2) eines industriellen Automatisierungssystems angebunden sind, mit den folgenden Schritten:
- Hinterlegen eines Zuordnungsvektors (Z) in einem Speicher (32) des Feldbuskopplers (3), wobei der Zuordnungsvektor (Z) eine aktuelle Konfiguration der Module (5) widerspiegelt;
- Sukzessives Ermitteln der aktuell an den Subbus (4) angeschlossenen Module (5);
- Zuteilen einer anhand des Zuordnungsvektors (Z) bestimmten Adresse an das ermittelte Modul (5) und
- Adressieren der Module (5) mit der zugeteilten Adresse,
**dadurch gekennzeichnet, dass** eine Anzahl (N) von Modulen (5), die an den Feldbuskoppler (3) anschließbar sind, vorgegeben ist, und der Zuordnungsvektor (Z) mindestens die Anzahl (N) an Feldern aufweist, die jeweils anzeigen, ob ein Modul (5) in einer aktuellen Konfiguration vorhanden ist.

2. Verfahren nach Anspruch 1, bei dem die zugeteilten Adressen zur Adressierung der Module (5) auf dem Subbus (4) und dem Feldbus (2) verwendet werden.

3. Verfahren nach Anspruch 1, bei dem die zugeteilten Adressen zur Adressierung der Module (5) auf dem Feldbus (2) verwendet werden, wobei zur Adressierung auf dem Subbus (4) davon abweichende Adressen verwendet werden.

4. Verfahren nach Anspruch 3, bei dem eine Adressumsetzung zwischen dem Subbus (4) und dem Feldbus (2) durch den Feldbuskoppler (3) erfolgt.

5. Verfahren nach einem der Ansprüche 1 bis 4, bei dem
- die zugeteilten Adressen aus einer vorgegebenen Liste von Adressen entnommen werden, wobei ein Adresszeiger geführt wird, der auf die nächste zu vergebende Adresse in der Liste zeigt,
- ein Feldzeiger geführt wird, der auf die Felder des Zuordnungsvektors (Z) zeigt,
- sukzessive der Feldzeiger und der Adresszeiger inkrementiert werden, wobei einem ermittelten Modul (5) dann die Adresse, auf die der Adresszeiger zeigt, zugeteilt wird, wenn der Zuordnungsvektor (Z) ein Vorhandensein eines Moduls (5) anzeigt.

6. Verfahren nach einem der Ansprüche 1 bis 4, bei dem
- jedes Feld, das das Vorhandensein eines Moduls (5) anzeigt, eine gewünschte Adresse des Moduls beinhaltet,
- ein Feldzeiger geführt wird, der auf die Felder des Zuordnungsvektors (Z) zeigt,
- sukzessive der Feldzeiger inkrementiert wird, wobei einem ermittelten Modul (5) dann die gewünschte Adresse aus dem Feld, auf das der Feldzeiger zeigt, zugeteilt wird, wenn der Zuordnungsvektor (Z) ein Vorhandensein eines Moduls (5) anzeigt.

7. Verfahren nach Anspruch 5 oder 6, bei dem ein Vorhandensein eines Moduls (5) durch einen Wert ungleich Null in dem jeweiligen Feld angezeigt wird.

8. Feldbuskoppler (3) zur Anbindung von Modulen (5) an einen Feldbus (2) eines industriellen Automatisierungssystems über einen Subbus (4), **dadurch gekennzeichnet, dass** der Feldbuskoppler (3) eine Steuereinrichtung (31) aufweist, die zur Durchführung eines Verfahrens gemäß einem der vorstehenden Ansprüche eingerichtet ist.

## Claims

1. Method for addressing modules (5) which are connected via a sub-bus (4) to a fieldbus coupler (3) and are connected via the fieldbus coupler (3) to a fieldbus (2) of an industrial automation system, comprising the following steps:
- depositing an assignment vector (Z) in a memory (32) of the fieldbus coupler (3), wherein the assignment vector (Z) reflects a current configuration of the modules (5);
- successively determining the modules (5) currently connected to the sub-bus (4);
- allocating an address determined on the basis of the assignment vector (Z) to the determined module (5), and
- addressing the modules (5) with the assigned address,
**characterized in that**
a number (N) of modules (5) connectable to the fieldbus coupler (3) is predetermined, and the assignment vector (Z) has at least the number (N) of fields which each indicate whether a module (5) is present in a current configuration.

2. Method according to claim 1, wherein the allocated addresses are used for addressing the modules (5) on the sub-bus (4) and the field bus (2).

3. Method according to claim 1, wherein the allocated addresses are used for addressing the modules (5) on the field bus (2), wherein addresses which are different from those are used for addressing on the sub-bus (4).

4. Method according to Claim 3, wherein an address conversion between the sub-bus (4) and the field bus (2) is carried out by the fieldbus coupler (3).

5. Method according to one of the claims 1 to 4, wherein
- the assigned addresses are taken from a predetermined list of addresses, wherein an address pointer is guided which points to the next address to be assigned in the list,
- a field pointer is guided which points to the fields of the assignment vector (Z),
- successively incrementing the field pointer and the address pointer, wherein the address to which the address pointer points is then assigned to a determined module (5) when the assignment vector (Z) indicates the presence of a module (5).

6. Method according to one of the claims 1 to 4, wherein
- each field indicating the presence of a module (5) contains a desired address of the module,
- a field pointer is guided which points to the fields of the assignment vector (Z),
- successively incrementing the field pointer, wherein the desired address from the field to which the field pointer points is assigned to a determined module (5) when the assignment vector (Z) indicates the presence of a module (5).

7. A method according to claim 5 or 6, wherein a presence of a module (5) is indicated by a nonzero value in the respective field.

8. Fieldbus coupler (3) for connecting modules (5) to a fieldbus (2) of an industrial automation system via a sub-bus (4), **characterized in that** the fieldbus coupler (3) has a control device (31) which is set up for carrying out a method according to one of the preceding claims.

## Revendications

1. Procédé d'adressage de modules (5) qui sont reliés par l'intermédiaire d'un sous-bus (4) à un coupleur de bus de terrain (3) et connectés par l'intermédiaire du coupleur de bus de terrain (3) à un bus de terrain (2) d'un système d'automatisation industriel, comprenant les étapes suivantes :
- enregistrement dans une mémoire (32) du coupleur de bus de terrain (3) d'un vecteur d'affectation (Z) qui reflète une configuration actuelle des modules (5) ;
- détermination successive des modules (5) actuellement connectés au sous-bus (4) ;
- attribution au module (5) déterminé d'une adresse déterminée à l'aide du vecteur d'affectation (Z) et
- adressage des modules (5) en utilisant l'adresse attribuée,
**caractérisé en ce**
**qu'**un nombre (N) de modules (5) pouvant être connectés au coupleur de bus de terrain (3) est prédéfini et le vecteur d'affectation (Z) présente au moins le nombre (N) de champs qui indiquent chaque fois si un module (5) est présent dans une configuration actuelle.

2. Procédé selon la revendication 1, dans lequel les adresses attribuées sont utilisées pour adresser les modules (5) sur le sous-bus (4) et le bus de terrain (2).

3. Procédé selon la revendication 1, dans lequel les adresses attribuées sont utilisées pour adresser les modules (5) sur le bus de terrain (2), des adresses différentes étant utilisées pour l'adressage sur le sous-bus (4).

4. Procédé selon la revendication 3, dans lequel une conversion d'adresses entre le sous-bus (4) et le bus de terrain (2) est effectuée par le coupleur de bus de terrain (3).

5. Procédé selon l'une des revendications 1 à 4, dans lequel
- les adresses attribuées sont tirées d'une liste prédéfinie d'adresses, un pointeur d'adresses, qui pointe sur la prochaine adresse à attribuer dans la liste, étant géré,
- un pointeur de champs, qui pointe sur les champs du vecteur d'affectation (Z), est géré,
- le pointeur de champs et le pointeur d'adresses sont successivement incrémentés, l'adresse sur laquelle pointe le pointeur d'adresses étant ensuite attribuée à un module (5) déterminé lorsque le vecteur d'affectation (Z) indique une présence d'un module (5).

6. Procédé selon l'une des revendications 1 à 4, dans lequel
- chaque champ qui indique la présence d'un module (5) contient une adresse souhaitée du module,
- un pointeur de champs, qui pointe sur les champs du vecteur d'affectation (Z), est géré,
- le pointeur de champs est successivement incrémenté, l'adresse souhaitée contenue dans le champ sur lequel pointe le pointeur de champs étant ensuite attribuée à un module (5) déterminé lorsque le vecteur d'affectation (Z) indique une présence d'un module (5).

7. Procédé selon la revendication 5 ou 6, dans lequel une présence d'un module (5) est indiquée par une valeur différente de zéro dans le champ concerné.

8. Coupleur de bus de terrain (3) pour la connexion de modules (5) à un bus de terrain (2) d'un système d'automatisation industriel par l'intermédiaire d'un sous-bus (4), **caractérisé en ce que** le coupleur de bus de terrain (3) présente un dispositif de commande (31) qui est conçu pour mettre en oeuvre un procédé selon l'une des revendications précédentes.
